# EUROPÄISCHE PATENTSCHRIFT

(11) **EP 2 346 716 B1**
(45) Veröffentlichungstag und Bekanntmachung des Hinweises auf die Patenterteilung: **08.05.2013**
(21) Anmeldenummer: 09737360.9
(22) Anmeldetag: 15.10.2009
(51) Int. Cl.: B60N 2/08

(54) **LÄNGSEINSTELLER FÜR EINEN FAHRZEUGSITZ**
LONGITUDINAL ADJUSTER FOR A VEHICLE SEAT
DISPOSITIF DE RÉGLAGE LONGITUDINAL D'UN SIÈGE DE VÉHICULE

(30) Priorität: 07.11.2008 DE 102008056683
(43) Veröffentlichungstag der Anmeldung: 27.07.2011
(73) Patentinhaber: KEIPER GmbH & Co. KG, 67657 Kaiserslautern (DE)
(72) Erfinder: JÄHNER, Falko, 67659 Kaiserslautern (DE); DROPMANN, Hans, 50825 Köln (DE)
(74) Vertreter: Liedtke, Markus
(86) Internationale Anmeldenummer: PCT/EP2009/007393
(87) Internationale Veröffentlichungsnummer: WO 2010/051903

(56) Entgegenhaltungen:
- DE-B4-102004 051 694
- FR-A1- 2 829 974

## Beschreibung

Die Erfindung betrifft einen Längseinsteller für einen Fahrzeugsitz mit den Merkmalen des Oberbegriffs des Anspruches 1.

Aus der DE 100 50 959 B4 ist ein Längseinsteller bekannt, bei welchem die erste Sitzschiene zwei gegenüberliegende Reihen von Rasten aufweist und in der zweiten Sitzschiene drei Rastplatten gelagert sind. Jede Rastplatte weist auf beiden Längsseiten des Grundkörpers drei Zähne auf, die durch Schlitze der zweiten Sitzschiene ragen und in die Rasten einfallen können. Im Normalfall erfolgt eine spielfrei Verriegelung durch wenigstens eine der Rastplatten. Im Crashfall verformen sich Stege zwischen den Schlitzen, so dass ab einer bestimmten Last wenigstens eine weitere Rastplatte zum Tragen kommt. Die FR 2 829 974 A1 beschreibt einen Längseinsteller der eingangs genannten Art, bei dem auf einer Fahrzeugsitzseite eine erste Sitzschiene und eine Rastplatte mit jeweils einer ersten Teilung und auf der anderen Fahrzeugsitzseite eine erste Sitzschiene und zwei Rastplatten mit jeweils einer zweiten Teilung aufweist.

Der Erfindung liegt die Aufgabe zu Grunde, einen Längseinsteller der eingangs genannten Art zu verbessern, insbesondere Bauraum und Gewicht zu reduzieren. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Rastplatten mit nur zwei Zähnen pro Reihe von Rasten (d.h. in der Regel pro Längsseite der Rastplatten) erlauben es, den notwendigen Überlappungsbereich der Sitzschienen zu verringern (gegenüber Längseinstellern mit Rastplatten mit drei Zähnen pro Längsseite), wodurch sich der Bereich der einstellbaren Sitzlängspositionen (bei gleicher Länge der Sitzschienen) vergrößert. Indem verschiedene Rastplatten für die Verriegelung zuständig sind, kann sichergestellt werden, dass in allen Sitzlängspositionen eine spielfreie Verriegelung möglich ist. Diese Spielfreistellung erfolgt mit Zähnen verschiedener Rastplatten, wofür die Teilungen der Zähne und der Rasten unterschiedlich gewählt sind.

Eine unterschiedliche Teilung von Rasten und Zähnen der Rastplatten erlaubt eine gezielte Ausgestaltung der zweiten Sitzschiene, die vorzugsweise Schlitze, aus denen die Zähne der Rastplatten herausragen, und Aussparungen, die das Material zwischen den Schlitzen gezielt schwächen, aufweist. Die Teilungen können so gewählt werden, dass die Stege zwischen den Schlitzen und Aussparungen alle die gleiche Breite aufweisen. Bei Lastaufnahme erfolgt dann eine gleichmäßige Plastifizierung aller Stege, so dass in allen Einfallsituationen eine Anlage weiterer Zähne möglich ist.

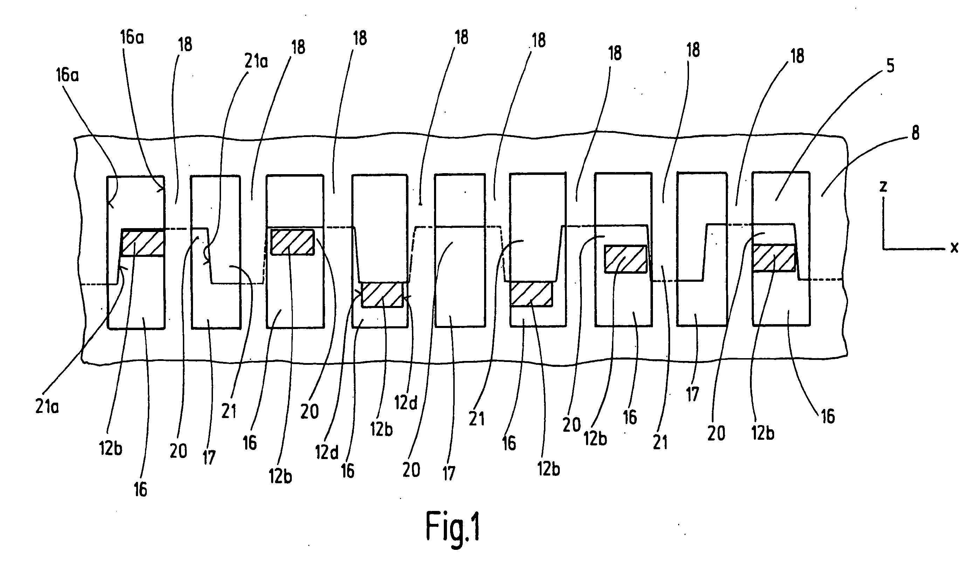

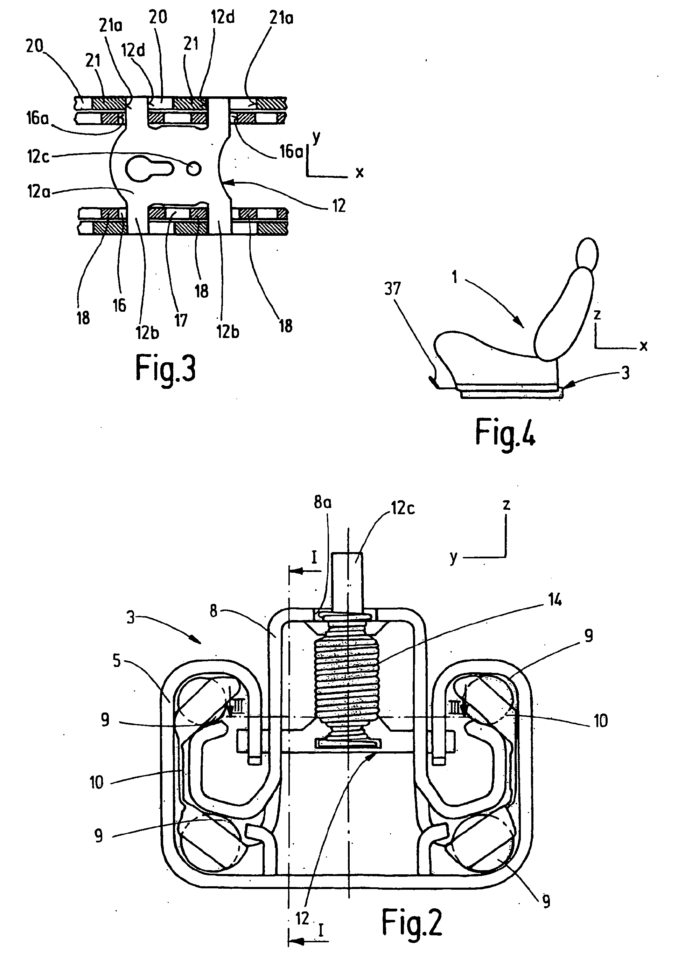

Im folgenden ist die Erfindung anhand eines in der Zeichnung dargestellten Ausführungsbeispiels näher erläutert. Es zeigen
- Fig. 1: einen vertikalen Schnitt durch das Ausführungsbeispiel in x-z-Ebene entlang der Linie I-I in Fig. 2,
- Fig. 2: einen vertikalen Schnitt durch das Ausführungsbeispiel in der y-z-Ebene,
- Fig. 3: einen horizontalen Schnitt durch das Ausführungsbeispiel entlang der Linie III-III in Fig. 2,
- Fig. 4: eine schematische Darstellung eines Fahrzeugsitzes, und

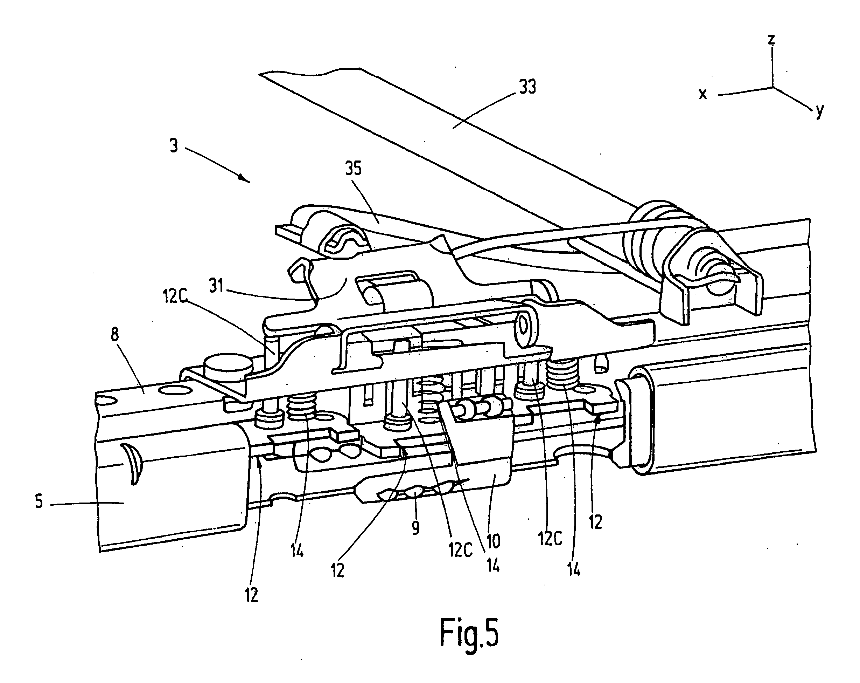

- Fig. 5: eine teilweise geschnittene, perspektivische Teilansicht des Ausführungsbeispiels.

Ein Fahrzeugsitz 1 eines Kraftfahrzeuges weist einen Längseinsteller 3 auf, mittels dessen der Fahrzeugsitz 1 längseinstellbar ist, d.h. dessen Sitzlängsposition in Sitzlängsrichtung x einstellbar ist. Die Sitzlängsrichtung x verläuft in der Regel parallel zur Fahrtrichtung. Der manuell betätigbare Längseinsteller 3 weist auf beiden Fahrzeugsitzseiten je eine erste Sitzschiene 5, die mit der Fahrzeugstruktur des Kraftfahrzeuges verbunden wird, und je eine zweite Sitzschiene 8 auf, die relativ zur zugeordneten ersten Sitzschiene 5 in Sitzlängsrichtung x verschieblich und mit dieser ersten Sitzschiene 5 verriegelbar ist. Dabei umgreifen sich die erste Sitzschiene 5 und die zweite Sitzschiene 8 gegenseitig mit ihren im wesentlichen U-förmigen Profilen mit nach innen bzw. nach außen gebogenen Längsrändern unter Zwischenlage von Kugeln 9. Die Kugeln 9 dienen sowohl der gegenseitigen Führung als auch der Verringerung der Reibung zwischen den Sitzschienen 5 und 8. Im vorliegenden Ausführungsbeispiel sind auf jeder Fahrzeugsitzseite in jeder der vier Ecken des gemeinsamen Schienenprofils der beide metallischen Sitzschienen 5 und 8 zwei Pakete zu je drei Kugeln 9 mit bestimmten Abständen in Sitzlängsrichtung x hintereinander angeordnet, wobei die metallischen Kugeln 9 von insgesamt zwei Kugelhalten 10 aus Kunststoff gehalten werden.

Zum Verriegeln von erster Sitzschiene 5 und zweiter Sitzschiene 8 sind auf jeder Fahrzeugsitzseite drei Rastplatten 12 vorgesehen, welche jeweils in der Verriegelungsrichtüng z in der zweiten Sitzschiene 8 beweglich geführt sind und zum Zusammenwirken mit der ersten. Sitzschiene 5 ausgebildet sind. Jede Rastplatte 12 weist einen flachen Grundkörper 12a auf, welcher sich in Sitzlängsrichtung x erstreckt und von welchem auf beiden Längsseiten des Grundkörpers 12 je genau zwei Zähne 12b in einer Querrichtung y abstehen, also ein in Sitzlängsrichtung x vorderer Zahn 12b und ein in Sitzlängsrichtung x hinterer Zahn 12b. Die Führung in der zweiten Sitzschiene 8 erfolgt mittels eines Führungsstiftes 12c, welcher in der Verriegelungsrichtung z vom Grundkörper 12a der Rastplatte 12 absteht und mit Spiel durch eine Führungsöffnung 8a in der zweiten Sitzschiene 8, vorliegend in deren Oberseite, greift. Die Führungsöffnung 8a ist vorzugsweise mit einem etwas größeren Querschnitt als der Führungsstift 12c ausgebildet, um Spielausgleichsmöglichkeiten zu schaffen. Eine Zugfeder 14, die einerseits an der zugeordneten Rastplatte 12 und andererseits an der zweiten Sitzschiene 8 eingehängt ist, spannt die Rastplatte 12 in Verriegelungsrichtung z gegen die zweite Sitzschiene 8 vor. Die Sitzlängsrichtung x, die Querrichtung y und die Verriegelungsrichtung z stehen senkrecht zueinander bilden ein Rechtssystem. Jeder Zahn 12b ist vorliegend sowohl in der x-z-Ebene als auch in der x-y-Ebene rechteckförmig profiliert, wobei alle Zähne die gleichen Abmessungen aufweisen. Somit weist jeder Zahn 12b - in Sitzlängsrichtung x betrachtet - eine vordere Zahnflanke 12d und eine hintere Zahnflanke 12d auf.

Die drei Rastplatten 12 sind in Sitzlängsrichtung x hintereinander mit ihrem Grundkörper 12a innerhalb des im wesentlichen U-förmigen Profils der zweiten Sitzschiene 8 angeordnet, wobei alle Zähne 12b der drei Rastplatten 12 durch Schlitze 16 in den Seitenwänden der zweiten Sitzschiene 8 herausragen. Seitlich der Schlitze 16 sind in den Seitenwänden der zweiten Sitzschiene 8 Aussparungen 17 vorgesehen. Der Materialbereich der Seitenwand zwischen einem Schlitz 16 und einer Aussparung 17 oder einem benachbarten Schlitz 16 sei als Steg 18 bezeichnet. Durch die Aussparungen 17 wird das Material zwischen den Schlitzen 16, also die Stege 18, gezielt geschwächt, wie in der DE 100 50 959 B4 beschrieben, deren diesbezüglicher Offenbarungsgehalt ausdrücklich einbezogen wird. Die Schlitze 16 und die Aussparungen 17 sind rechteckförmig ausgebildet, so dass bei jedem Schlitz 16 die beiden benachbarten Stege 18 (und bei dem in Sitzlängsrichtung ersten und letzten Schlitz 16 die Seitenwand der zweiten Sitzschiene 8) je einen in Verriegelungsrichtung z verlaufenden Rand 16a zur Begrenzung der Schlitze 16 bilden, also einen in Sitzlängsrichtung x vorderen Rand 16a und einen in Sitzlängsrichtung x hinteren Rand 16a.

Die Zähne 12b sind zum Einfallen in Rasten 20 der ersten Sitzschiene 5 vorgesehen, wobei die Rasten 20 durch Vorsprünge 21 der ersten Sitzschiene 5 getrennt sind. Die Vorsprünge 21 weisen zwei Flanken 21a auf, welche die dazwischen angeordnete Raste 20 in Sitzlängsrichtung x begrenzen, wodurch eine vordere Flanke 2 1 a und eine hintere Flanke 21 a definiert sind. Unter einem "Vorsprung" soll die Materialpartie, unter einer "Raste" die Lücke im Material verstanden werden. Die Rasten 20 und Vorsprünge 21 sind in wenigstens einer in Sitzlängsrichtung verlaufenden Reihe, in der Regel in zwei in Querrichtung y gegenüberliegende Reihen angeordnet. Im vorliegenden Ausführungsbeispiel sind die Rasten 20 in den nach unten gebogenen Bereichen der Längsränder der ersten Sitzschiene 5 ausgebildet, d.h. die halboffenen Rasten 20 öffnen sich nach unten, während die Vorsprünge 21 zahnartig nach unten ragen. Die Vorsprünge 21 verjüngen sich zu ihrem freien Ende hin (also entgegen der Verriegelungsrichtung z). Im Ausführungsbeispiel sind die beiden Flanken 21 a der Vorsprünge 21 in einem Winkel von 6°±2° zur Verriegelungsrichtung z geneigt und gehen dann mit einem Radius in den Grund der anschließenden Raste 20 über.

Die Abmessungen, d.h. Breiten und Abstände, der Zähne 12b, Schlitze 16, Aussparungen 17, Stege 18, Rasten 20 und Vorsprünge 21 sind in Sitzlängsrichtung x in bestimmter Weise gewählt. Die Schlitze 16 sind breiter als die Zähne 12b (beispielsweise ein Viertel breiter), wobei die hintere Zahnflanke 12d des vorderen Zahnes 12b einer jeden Rastplatte 12 in Anlage an den hinteren Rand 16a des zugeordneten Schlitzes 16 und die vordere Zahnflanke 12d des hinteren Zahnes 12b in Anlage an den vorderen Rand 16a des zugeordneten Schlitzes 16 kommen dann. Die Rastplatte 12 wird somit durch die einander zugewandten Zahnflanken 12d geführt. Die Stege 18 sind alle gleich breit (beispielsweise halb so breit wie die Schlitze 16), können aber alternativ bis zu drei Zehntel unterschiedlich sein. Die Aussparungen 17 sind etwas schmäler als die Schlitze 16 (beispielsweise ein Zehntel schmäler). Die Rasten 20 sind breiter als die Zähne 12b (beispielsweise ungefähr doppelt so breit). Die Vorsprünge 21 sind etwas breiter als die Zähne 12b (beispielsweise am freien Ende ein Fünftel breiter). Die Teilung der Rasten 20, also der Abstand zwischen zwei vorderen Flanken 21a (oder zwei hinteren Flanken 21b), ist etwas kleiner als die Teilung der Zähne 12b, also der Abstand zwischen den beiden vorderen Zahnflanken 12d (oder den beiden hinteren Zahnflanken 12d) einer Rastplatte 12 (beispielweise ein bis zwei Hundertstel kleiner, d.h. bei üblichen Abmessungen ca. 0,1 mm bis 0,3 mm). Vorliegend beträgt die Teilung der Rasten 20 15,0 mm, die Teilung der Zähne 12b 15,2 mm.

Die besagten Abmessungen sind so gewählt, dass in jeder Sitzlängsposition die spielfreie Verriegelung durch zwei zu verschiedenen Rastplatten 12 gehörende Zähne 12b pro Reihe von Rasten 20 erfolgt. Bei einer der beiden eingefallenen Rastplatten 12 liegt der vordere Zahn 12b mit seiner zum hinteren Zahn 12b der gleichen Rastplatte 12 gewandten (hinteren) Zahnflanke 12d am (hinteren) Rand 16a des zugeordneten Schlitzes 16 an und mit der davon abgewandten (vorderen) Zahnflanke 12d an der (hinteren) Flanke 21 a des Vorsprungs 21 vor der betreffenden Raste 20. Bei der anderen der beiden eingefallenen Rastplatten 12 liegt der hintere Zahn 12b mit seiner zum vorderen Zahn 12b der gleichen Rastplatte 12 gewandten (vorderen) Zahnflanke 12d am (vorderen) Rand 16a des zugeordneten Schlitzes 16 an und mit der davon abgewandten (hinteren) Zahnflanke 12d an der (vorderen) Flanke 21a des Vorsprungs 21 hinter der betreffenden Raste 20. Die Anlage kann jeweils punktförmig, linienförmig oder flächenmäßig erfolgen. Mit diesem im Normalfall vorliegenden Zustand des verriegelten Längseinstellers 3 wird sowohl eine Spielfreiheit geschaffen als auch eine quasi stufenlose Längseinstellung. Die dritte Rastplatte 12 liegt mit ihren beiden Zähnen 12b auf zwei Vorsprüngen 21 auf. Die Längseinstellung ist nur quasi stufenlos, da zwar in jeder Sitzlängsposition jeweils immer eine Rastplatte 12 einfallen kann, die zweite Sitzschiene 8 jedoch ein Setzverhalten zeigt, d.h. sich während des Einfallens geringfügig bewegt, bis auch die zweite Rastplatte 12 einfällt.

Bei einem in (oder entgegen der) Sitzlängsrichtung erfolgenden Crashfall findet eine plastische Verformung der Stege 18 statt, so dass die bislang unbeteiligten Zähne 12b der beiden eingefallenen Rastplatten 12 sowie der dritten Rastplatte 12 in Anlage an Flanken 21a und/oder Ränder 16a gelangen, womit der gesamte Längseinsteller 3 verriegelt gehalten wird.

Zur Entriegelung des Längseinstellers 3 sind in an sich bekannter Weise an jeder zweiten Sitzschiene 8 eine schwenkbar gelagerte Entriegelungsklappe 31 und zwischen den beiden zweiten Sitzschienen 8 ein in Querrichtung y verlaufendes, schwenkbar gelagertes Querrohr 33 mit je einem nach hinten abstehenden Arm 35 auf jeder Fahrzeugsitzseite und mit einem nach vorne abstehenden Hebel 37 zwischen den beiden Fahrzeugsitzseiten, welcher an dem in Sitzlängsrichtung vorderen Ende des Fahrzeugsitzes 1 zugänglich ist; vorgesehen. Durch Schwenken des Hebels 37 nach oben dreht sich das Querrohr 33 und schwenkt die beiden Arme 35 nach unten. Jeder Arm 35 beaufschlagt die zugeordnete Entriegelungsklappe, welche ihrerseits die Führungsstifte 12c der drei zugeordneten Rastplatten 12 beaufschlagt, so dass letztere entgegen der Verriegelungsrichtung z bewegt werden und dadurch die Rasten 20 verlassen. Die zweiten Sitzschienen 8 können nun relativ zueinander verschoben werden.

### Bezugszeichenliste

| | |
|---|---|
| 1 | Fahrzeugsitz |
| 3 | Längseinsteller |
| 5 | erste Sitzschiene |
| 8 | zweite Sitzschiene |
| 8a | Führungsöffnung |
| 9 | Kugel |
| 10 | Kugelhalter |
| 12 | Rastplatte |
| 12a | Grundkörper |
| 12b | Zahn |
| 12c | Führungsstift |
| 12d | Zahnflanke |
| 14 | Zugfeder |
| 16 | Schlitz |
| 16a | Rand |
| 17 | Aussparung |
| 18 | Steg |
| 20 | Raste |
| 21 | Vorsprung |
| 21 a | Flanke |
| 31 | Entriegelungsklappe |
| 33 | Querrohr |
| 35 | Arm |
| 37 | Hebel |
| x | Sitzlängsrichtung |
| y | Querrichtung |
| z | Verriegelungsrichtung |

## Patentansprüche

1. Längseinsteller für einen Fahrzeugsitz, insbesondere Kraftfahrzeugsitz, mit
a) wenigstens einer ersten Sitzschiene (5) mit Rasten (20), welche in wenigstens einer in Sitzlängsrichtung (x) verlaufenden Reihe angeordnet sind, wobei jede Raste (20) in Sitzlängsrichtung (x) eine vordere Flanke (21a) und eine hintere Flanke (21a) aufweist,
b) wenigstens einer zweiten Sitzschiene (8), welche relativ zur ersten Sitzschiene (5) in Sitzlängsrichtung (x) verschieblich und mit dieser verriegelbar ist,
c) wenigstens zwei Rastplatten (12) zum Verriegeln der ersten Sitzschiene (5) mit der zweiten Sitzschiene (8), wobei die Rastplatten (12) in der zweiten Sitzschiene (8) in der Verriegelungsrichtung (z) beweglich gelagert sind und Zähne (12b) zum Einfallen in die Rasten (20) der ersten Sitzschiene (5) aufweisen, wobei jeder Zahn (12b) in Sitzlängsrichtung (x) eine vordere und eine hintere Zahnflanke (12d) aufweist, und wobei zum spielfreien Verriegeln der ersten Sitzschiene (5) mit der zweiten Sitzschiene (8) zwei zu verschiedenen Rastplatten (12) gehörende Zähne (12b) mit der diesen Zähnen (12b) zugeordneten Reihe von Rasten (20) zusammenwirken.
**dadurch gekennzeichnet, dass**
d)jede der Rastplatten (12) genau zwei Zähne (12b) pro zugeordneter Reihe von Rasten (20) aufweist, und
e) in Sitzlängsrichtung (x) die Teilung der Rasten (20) kleiner ist als die Teilung der Zähne (12b) einer jeden Rastplatte (12).

2. Längseinsteller nach Anspruch 1, **dadurch gekennzeichnet, dass** die Teilung der Rasten (20) ein bis zwei Hundertstel kleiner ist als die Teilung der Zähne (12b).

3. Längseinsteller nach einem der vorhergehenden Ansprüche, **dadurch gekennzeichnet, dass** die zweite Sitzschiene (8) Schlitze (16) aufweist, aus denen die Zähne (12b) der Rastplatte (12) herausragen, wobei die Schlitze (16) in Sitzlängsrichtung einen vorderen Rand (16a) und einen hinteren Rand (16a) aufweisen.

4. Längseinsteller nach Anspruch 3, **dadurch gekennzeichnet, dass** zwischen den Schlitzen (16) Stege (18) der zweiten Sitzschiene (8) als Material angeordnet sind.

5. Längseinsteller nach Anspruch 4, **dadurch gekennzeichnet, dass** die zweite Sitzschiene (8) Aussparungen (17) aufweist, die den Schlitzen (16) benachbart sind, wobei zwischen je einem Schlitz (16) und je einer Aussparung (17) je ein Steg (18) vorgesehen ist.

6. Längseinsteller nach Anspruch 4 oder 5, **dadurch gekennzeichnet, dass** die Stege (18) die gleiche Breite aufweisen oder sich um bis zu drei Zehntel unterscheiden.

7. Längseinsteller nach einem der Ansprüche 3 bis 6, **dadurch gekennzeichnet, dass** im Normalfall einer der beiden Zähne (12b) der einen der beiden eingefallenen Rastplatten (12) mit seiner vorderen Zahnflanke (12d) am vorderen Rand (16a) des zugeordneten Schlitzes (16) und mit seiner hinteren Zahnflanke (12d) an der hinteren Flanke (21a) der zusammenwirkenden Rasten (20) anliegt.

8. Längseinsteller nach Anspruch 7, **dadurch gekennzeichnet, dass** im Normalfall einer der beiden Zähne (12b) der anderen der beiden eingefallenen Rastplatten (12) mit seiner hinteren Zahnflanke (12d) am hinteren Rand (16a) des zugeordneten Schlitzes (16) und mit seiner vorderen Zahnflanke (12d) an der vorderen Flanke (21a) der zusammenwirkenden Rasten (20) anliegt.

9. Längseinsteller nach Anspruch 7 oder 8, **dadurch gekennzeichnet, dass** der jeweils andere der beiden Zähne (12b) der beiden eingefallenen Rastplatten (12) von den Flanken (21a) und Rändern (16a) beabstandet und damit am Zusammenwirken im Normalfall unbeteiligt ist.

10. Längseinsteller nach Anspruch 9, **dadurch gekennzeichnet, dass** im Crashfall eine plastische Verformung der Stege (18) erfolgt, so dass die bislang unbeteiligten Zähne (12b) der beiden eingefallenen Rastplatten (12) in Anlage an Flanken (21a) und/oder Ränder (16a) gelangen.

11. Längseinsteller nach einem der vorhergehenden Ansprüche, **dadurch gekennzeichnet, dass** auf jeder Fahrzeugsitzseite je eine erste Sitzschiene (5) und je eine zweite Sitzschiene (8) vorgesehen sind, wobei die beiden zweiten Sitzschienen (8) je drei Rastplatten (12) lagern.

12. Längseinsteller nach Anspruch 11, **dadurch gekennzeichnet, dass** die dritte Rastplatte (12) im Crashfall in die erste Sitzschiene (5) einfällt.

13. Fahrzeugsitz mit einem Längseinsteller nach einem der vorhergehenden Ansprüche zur Einstellung der Sitzlängsposition.

## Claims

1. Fore and aft adjuster for a vehicle seat, especially for a motor vehicle seat, having
a) at least one first seat rail (5) with catches (20) which are arranged in at least one row running in longitudinal seat direction (x) while every catch (20) in longitudinal seat direction (x) presents a front-side flank (21 a) and a rear-side flank (21 a),
b) at least one second seat rail (8) which is slidable in longitudinal seat direction (x) relative to the first seat rail (5) and lockable with the latter,
c) at least two latching plates (12) for locking the first seat rail (5) with the second seat rail (8), while the latching plates (12) in the second seat rail (8) are mounted movably in the locking direction (z) and present teeth (12b) for engaging in the catches (20) of the first seat rail (5), while every tooth (12b) in longitudinal seat direction (x) presents a front-side and a rear-side tooth flanks (12d), and while, to ensure the backlash-free locking of the first seat rail (5) with the second seat rail (8), two teeth (12b) belonging to different latching plates (12) cooperate with the row of catches (20) assigned to these teeth (12b).
**characterized in that**
d) every of the latching plates (12) presents precisely two teeth (12b) per assigned row of catches (20), and
e) the pitch of the catches (20) in longitudinal seat direction (x) is smaller than the pitch of the teeth (12b) of every latching plate (12).

2. Fore and aft adjuster as claimed in claim 1, **characterized in that** the pitch of the catches (20) is between one and two hundredth smaller than the pitch of the teeth (12b).

3. Fore and aft adjuster as claimed in any preceding claim, **characterized in that** the second seat rail (8) presents slots (16) out of which project the teeth (12b) of the latching plate (12), while the slots (16) present a front-side border (16a) and a rear-side border (16a) in longitudinal seat direction.

4. Fore and aft adjuster as claimed in claim 3, **characterized in that**, webs (18) are arranged as material between the slots (16) of the second seat rail (8).

5. Fore and aft adjuster as claimed in claim 4 **characterized in that** the second seat rail (8) presents recesses (17) which are adjacent to the slots (16) while one web (18) each is provided for each between one slot (16) and one recess (17).

6. Fore and aft adjuster as claimed in claim 4 or 5, **characterized in that** the webs (18) present an equal width or differ by up to three tenths.

7. Fore and aft adjuster as claimed in any claim 3 through 6, **characterized in that** one of the two teeth (12b) of one of the two latching plates (12) engaged normally is applied with its front-side tooth flank (12d) against the front-side border (16a) of the assigned slot (16) and with its rear-side tooth flank (12d) against the rear-side flank (21 a) of the co-operating catches (20).

8. Fore and aft adjuster as claimed in claim 7, **characterized in that** one of the two teeth (12b) of the other of the two latching plates (12) engaged normally is applied with its rear-side tooth flank (12d) against the rear-side border (16a) of the assigned slot (16) and with its front-side tooth flank (12d) against the front-side flank (21 a) of the co-operating catches (20).

9. Fore and aft adjuster as claimed in claims 7 or 8, **characterized in that** every other of the two teeth (12b) of the two latching plates (12) engaged is spaced from the flanks (21 a) and borders (16a) and does thus not normally participate in co-operation.

10. Fore and aft adjuster as claimed in claim 9, **characterized in that**, in the event of a crash, a plastic deformation occurs in the webs (18) such that the teeth (12b) not participating of the two latching plates (12) thus far are made to abut against flanks (21 a) and/or borders (16a).

11. Fore and aft adjuster as claimed in any preceding claim, **characterized in that** one first seat rail (5) and one second seat rail (8) are each provided on every vehicle seat side while the two second seat rails (8) each bear three latching plates (12).

12. Fore and aft adjuster as claimed in claim 11, **characterized in that**, in the event of a crash, the third latching plate (12) engages in the first seat rail (5).

13. Vehicle seat with one fore and aft adjuster as claimed in any preceding claim for setting the longitudinal seat position.

## Revendications

1. Dispositif de réglage longitudinal pour un siège de véhicule, en particulier un siège de véhicule automobile, avec
a) au moins un premier rail de siège (5) avec des crans d'arrêt (20) disposés sur au moins une rangée s'étendant dans la direction longitudinale (x) du siège, chaque cran d'arrêt (20) présentant un flanc avant (21 a) et un flanc arrière (21 a) dans la direction longitudinale (x) du siège,
b) au moins un deuxième rail de siège (8), déplaçable par rapport au premier rail de siège (5) dans la direction longitudinale (x) du siège et verrouillable avec celui-ci,
c) au moins deux plaques d'enclenchement (12) pour le verrouillage du premier rail de siège (5) avec le deuxième rail de siège (8), les plaques d'enclenchement (12) étant montées de manière mobile dans la direction de verrouillage (z) dans le deuxième rail de siège (8) et comportant des dents (12b) destinées à s'engager dans les crans d'arrêt (20) du premier rail de siège (5), chaque dent (12b) présentant un flanc avant et un flanc arrière (12d) de dent dans la direction longitudinale (x) du siège, et deux dents (12b) appartenant à des plaques d'enclenchement (12) différentes coopérant avec la rangée de crans d'arrêt (20) correspondant auxdites dents (12b) pour le verrouillage exempt de jeu du premier rail de siège (5) avec le deuxième rail de siège (8),
**caractérisé**
d) **en ce que** chaque plaque d'enclenchement (12) comporte exactement deux dents (12b) par rangée de crans d'arrêt (20) correspondante, et
e) **en ce que**, dans la direction longitudinale (x) du siège le pas des crans d'arrêt (20) est inférieur au pas des dents (12b) de chaque plaque d'enclenchement (12).

2. Dispositif de réglage longitudinal selon la revendication 1, **caractérisé en ce que** le pas des crans d'arrêt (20) est inférieur de un à deux centièmes au pas des dents (12b).

3. Dispositif de réglage longitudinal selon l'une des revendications précédentes, **caractérisé en ce que** le deuxième rail de siège (8) comporte des fentes (16) dont font saillie les dents (12b) de la plaque d'enclenchement (12), les fentes (16) présentant un bord avant (16a) et un bord arrière (16a) dans la direction longitudinale du siège.

4. Dispositif de réglage longitudinal selon la revendication 3, **caractérisé en ce que** des épaulements (18) du deuxième rail de siège (8) sont disposés comme matériau entre les fentes (16).

5. Dispositif de réglage longitudinal selon la revendication 4, **caractérisé en ce que** le deuxième rail de siège (8) présente des ouvertures (17) voisines des fentes (16), un épaulement (18) étant prévu entre chaque fente (16) et chaque ouverture (17).

6. Dispositif de réglage longitudinal selon la revendication 4 ou la revendication 5, **caractérisé en ce que** les épaulements (18) sont de même largeur ou se différencient de trois dixièmes au maximum.

7. Dispositif de réglage longitudinal selon l'une des revendications 3 à 6, **caractérisé en ce qu'**en cas normal, une des deux dents (12b) de la première des deux plaques d'enclenchement (12) enclenchées repose par son flanc de dent avant (12d) contre le bord avant (16a) de la fente (16) correspondante et par son flanc de dent arrière (12d) contre le flanc arrière (21 a) des crans d'arrêt (20) coopérant ensemble.

8. Dispositif de réglage longitudinal selon la revendication 7, **caractérisé en ce qu'**en cas normal, une des deux dents (12b) de l'autre des deux plaques d'enclenchement (12) enclenchées repose par son flanc de dent arrière (12d) contre le bord arrière (16a) de la fente (16) correspondante et par son flanc de dent arrière (12d) contre le flanc avant (21 a) des crans d'arrêt (20) coopérant ensemble.

9. Dispositif de réglage longitudinal selon la revendication 7 ou la revendication 8, **caractérisé en ce que** l'autre dent des deux dents (12b) des deux plaques d'enclenchement (12) enclenchées est espacée des flancs (21 a) et des bords (16a) et n'est donc pas impliqué dans la coopération en cas normal.

10. Dispositif de réglage longitudinal selon la revendication 9, **caractérisé en ce qu'**en cas de collision, les épaulements (18) subissent une déformation plastique, si bien que les dents (12b) auparavant non impliquées des deux plaques d'enclenchement (12) enclenchées viennent à buter contre les flancs (21 a) et/ou les bords (16a).

11. Dispositif de réglage longitudinal selon l'une des revendications précédentes, **caractérisé en ce qu'**un premier rail de siège (5) et un deuxième rail de siège (8) sont prévus de chaque côté du siège de véhicule, les deux deuxièmes rails de siège (8) recevant chacun trois plaques d'enclenchement (12).

12. Dispositif de réglage longitudinal selon la revendication 11, **caractérisé en ce que** la troisième plaque d'enclenchement (12) s'engage dans le premier rail de siège (5) en cas de collision.

13. Siège de véhicule avec un dispositif de réglage longitudinal selon l'une des revendications précédentes pour le réglage de la position longitudinale du siège.
